# EUROPEAN PATENT SPECIFICATION

(11) **EP 4 220 787 B1**
(45) Date of publication and mention of the grant of the patent: **04.09.2024**
(21) Application number: 22154251.7
(22) Date of filing: 31.01.2022
(51) Int. Cl.: H01M 8/2435, H01M 8/2483, H01M 8/12

(54) **INTERCONNECTING DEVICE FOR SOLID OXIDE FUEL CELLS AND A FUEL CELL STACK COMPRISING THE SAME**
VERBINDUNGSVORRICHTUNG FÜR FESTOXIDBRENNSTOFFZELLEN UND BRENNSTOFFZELLENSTAPEL DAMIT
DISPOSITIF D'INTERCONNEXION POUR PILES À COMBUSTIBLE À OXYDE SOLIDE ET BLOC DE PILES À COMBUSTIBLE LE COMPRENANT

(43) Date of publication of application: 02.08.2023
(73) Proprietor: Airbus Operations GmbH, 21129 Hamburg (DE)
(72) Inventor: NEHTER, Pedro, 21129 Hamburg (DE); LINDE, Peter, 21129 Hamburg (DE)
(74) Representative: LKGLOBAL Lorenz & Kopf Patentanwalt Attorney at Law PartG mbB

(56) References cited:
- US-A1- 2005 282 051
- US-A1- 2009 123 810
- US-A1- 2011 117 471

## Description

### Technical field

The invention relates to an interconnecting device for solid oxide fuel cells, a fuel cell stack, comprising a plurality of solid oxide fuel cells and at least one such interconnecting device, as well as a vehicle having at least one fuel cell stack.

### Background of the invention

Solid oxide fuel cells operate at high temperatures in a range of roughly 650 °C to 1000 °C. The electrolyte consists of a solid and gas-tight ceramic material, that is capable of conducting oxygen ions, but is isolating against electrons. A plurality of solid oxide fuel cells can be combined to form a fuel cell stack, wherein bipolar plates are arranged between consecutive fuel cells. The bipolar plates are attached to the anode of one of the fuel cells and the cathode of an adjacent fuel cell.

In a fuel cell stack, hydrogen gas enters through gas channels of a first bipolar plate and reaches an anode of a fuel cell that is in contact with the first bipolar plate. At a cathode of the same fuel cell, air or oxygen is supplied through gas channels of a second bipolar plate that is in contact with the cathode of the fuel cell. During the fuel cell process, oxygen ions pass through the electrolyte and electrons move from the anode into the bipolar plate for further entry into the adjacent cell. By connecting a series of fuel cells through bipolar plates arranged between them, a fuel cell stack is formed. An electric circuit can be connected to the fuel cell stack to use the generated voltage and to maintain the fuel cell process. In common fuel cell stacks, surplus hydrogen, not converted at the individual anodes, surplus air and reaction water leave the respective bipolar plates.

The bipolar plates fulfil a number of different functions. They distribute incoming reactants, i.e. hydrogen and air/oxygen, by their gas channels, which are also known as flow field. They carry a compressive pressure, due to the fact that a fuel cell stack is usually placed under compression, so as to ensure low contact resistances between the electrodes and the bipolar plates. Said gas distribution channels are provided by local removal of material, thus the remaining material is subjected to increased stress. The bipolar plates are also electrically connected to the fuel cells and collect the electrical current generated therein. Still further, heat that is generated in the fuel cells by the electrochemical reaction is received by the bipolar plates and may be transported out of the fuel cell by its thermal conductivity or e.g. through additional cooling channels. Commonly, a temperature gradient appears from the center of the bipolar plates towards the outer perimeter.

It is common to produce the bipolar plates from a metallic material. The electrical current generated in the fuel cell stack is hereby transferred within the bipolar plate in a perpendicular direction to a planar cell area, which enables an efficient current collection as a comparably large area with low ohmic electronic resistance can be used. This concept is known to be a promising solution for stationery power generation application. Even though the planar concept offers low current collection losses, planar bipolar plates provide the heaviest parts in a planar stack. For example, the bipolar plates can make up to 70 % of the total weight of a planar stack.

US 2005/282051 A1, according to its abstract, relates to a solid electrolyte fuel cell power generating system that integrates heat exchange, combustion, exhaust recycle, steam/fuel conditioning, fuel reforming, water condensing, water drainage, or water recycle into monolithic honeycomb structures. Manifolds serve as honeycomb multiple channel group gas passageways between channels within a honeycomb or between honeycombs. The said manifolds also serve as electrical interconnect or electrical power leads between honeycomb channels within said honeycomb structure or between honeycomb fuel cell structures. Honeycomb fuel cells can be stacked by utilizing the said manifolds. The honeycomb fuel cell system converses chemical energy of a fuel gas into electrical energy by an electrochemical process. The said integrated honeycomb fuel cell system design demonstrates simple, robust, and integrated mechanical structure and may enhance power efficiency and low cost.

### Summary of the invention

Compact solid oxide fuel cells (SOFC) may comprise an exemplarily cuboid fuel cell block, which comprises anode channels and cathode channels extending through the fuel cell block. The anode channels may comprise a circumferential coating, which constitute anodes. In analogy, the cathode channels may comprise a cathode coating, which constitute the respective cathodes. Such a fuel cell block may be made from a ceramic material and fuel cells are created by pairwise combinations of anode channels and cathode channels.

A challenge with this kind of compact SOFC is that bipolar plates, such as used for two-dimensional fuel cells are not suitable. In this context, monolithic cell designs offer a major optimization potential because the bipolar plates are not mandatory to be implemented, neither for the separation of the fuel cell and the fuel and air gas channels, or for the current collection. These concepts are known to make use of a current collection in the axial direction of the cell along the in-plane cross section of the electrodes. Thus, short distances for the current collection within the electrodes are mandatory to reduce the ohmic losses of current collection. An arrangement of electrically in series connected compact SOFCs is the desired approach of this invention to keep the current collection losses low. The supply of educts and current collection for the compact SOFC, like monolithic concepts, require another interconnecting device.

It is thus an object of the invention to propose an interconnecting device for connecting a plurality of compact solid oxide fuel cells, wherein the interconnecting device should comprise a minimum weight and a compact shape.

This object is met by an interconnecting device for compact solid oxide fuel cells having the features of claim 1. Advantageous embodiments and further improvements may be gathered from the subclaims and the following description.

An interconnecting device for compact solid oxide fuel cells is proposed, the interconnecting device comprising a body having a first interface surface, and a second interface surface on distinct sides of the body, wherein the first interface surface comprises at least one anode exhaust input and at least one cathode exhaust input in a distance to the at least one anode exhaust input, wherein the second interface surface comprises at least one fuel supply port and at least one oxidant supply port in a distance to the at least one fuel supply port, wherein the at least one anode exhaust input is in fluid communication with the at least one fuel supply port and/or at least one anode exhaust outlet arranged at a distance to the first interface surface and the second interface surface, wherein the at least one cathode exhaust input is in fluid communication with the at least one oxidant supply port and/or at least one cathode exhaust outlet arranged at a distance to the first interface surface and the second interface surface, wherein at least one first electrical port is arranged at or in the at least one cathode exhaust input and is connectable from the first interface surface, wherein at least one second electrical port is arranged at or in the at least one fuel supply port and is connectable from the second interface surface, and wherein the at least one first electrical port is electrically connected to the at least one second electrical port.

The interconnecting device is thus capable of being fitted between consecutive compact SOFCs to fulfill the functions of reactant supply of fuel and air/oxygen, as well as current collection, such as is performed by the bipolar plates for one-dimensional SOFCs and at the same time takes into account the more complex geometry of compact SOFCs. The interconnecting device has a body with a plurality of sides, wherein two of the sides are intended for providing the first interface surface and the second interface surface. The first interface surface is intended to be in contact with a first fuel cell, while the second interface surface is intended to be in contact with a subsequent, adjacent second fuel cell. Both fuel cells may be provided in the form of a compact SOFCs, as explained above.

Hence, the respective SOFCs comprise a three-dimensional shape and the anodes and cathodes are integrated in a closed circumference way to form three-dimensional gas channels. The anode and cathode are integrated within a 3D electrolyte/membrane support structure, with corresponding anode/cathode channels in an alternating manner. The first interface surface and second interface surface of the interconnecting device are adapted in size to the respective SOFCs, such that a flush contact between the SOFCs and the interface surfaces is possible. The positions of flow channels, which include the above-mentioned circumferentially arranged anodes and cathodes, match the positions of the respective anode exhaust input and cathode exhaust input as well as the fuel supply port and the oxidant supply port.

The interconnecting device may be clamped between two consecutive fuel cells, such that dedicated fastening or installation means are not required. The interconnecting device is then able to receive flows of exhaust fluids, i.e. anode exhaust and cathode exhaust. Anode exhaust comprises unused, surplus Hydro gene, while cathode exhaust comprises oxygen depleted air or unused oxygen. The interconnecting device is capable of routing these fluid flows to a dedicated target, e.g. into respective inlets of a subsequent fuel cell and/or to outlets arranged in the interconnecting device.

Still further, the first and second electric ports are provided to contact anodes and/or cathodes of the connected fuel cells, which may be realized by circumferential surfaces as explained above.

It is advantageous to provide the body from an electrically isolating material, which is capable of withstanding the high temperatures that arise in the solid oxide fuel cell process. It may be feasible to create the interconnecting device through a 3D printing process, which simplifies the electrical connection between the first electrical port and the second electric port by locally including an electrically conductive material.

It is also advantageous to provide the body from an electrically conducting material, which is capable of withstanding the high temperatures that arise in the solid oxide fuel cell process. The body may then be electrically connected either to the anode channel or the cathode channel of the upstream fuel cell only and inversely connected either to the cathode channel or the anode channel only of the downstream fuel cell. The other one of the anode channel or the cathode channel is then insulated against the body.

In the concept of the interconnecting device according to the invention, various different designs of solid oxide fuel cells may be considered and the interconnecting device may be tailored to the desired electrical connection and the educt supply concept. A variable number of anode exhaust inputs and cathode exhaust inputs on the first interface surface may be used, as well as a variable number of respective supply outlets on the second interface surface. Different distributions of fluids are possible, as further explained below.

In an advantageous embodiment, the first interface surface and the second interface surface are arranged on opposed sides of the body. Thus, in a simple case, a fluid may directly flow from the first interface surface to the second interface surface, i.e. without flowing through bends or curves. The respective exhaust input and supply port, that are connected to each other, may then be arranged directly behind each other, i.e. along a straight line. As bends and other redirections are not required, a thickness of the body of the interconnection device may be reduced, which in turn leads to a weight reduction. Still further, the electrical resistance in the thickness direction decreases and the flow of the respective fluids is optimized in terms of flow resistance.

In an advantageous embodiment, the interconnecting device further comprises at least one fuel inlet arranged on a side of the body that does neither comprise the first interface surface nor the second interface surface, wherein the at least one fuel inlet is in fluid communication with the at least one fuel supply port. The at least one fuel inlet serves to supply fuel into the interconnecting device from a side that laterally extends between two consecutive fuel cells, when the interconnecting device is installed. The flow of fuel from the respective side is directed to the at least one fuel supply port on the second interface surface. The at least one fuel inlet may simply be realized in the form of an opening, a channel, a flange, or any other suitable element that is connectable to a fuel source. The fuel will flow along a bent or curved line between the fuel inlet and the respective fuel supply port.

In an advantageous embodiment, the interconnecting device further comprises at least one oxidant inlet arranged on a side of the body that does neither comprise the first interface surface nor the second interface surface, wherein the at least one oxidant inlet is in fluid communication with the at least one oxidant supply port. In analogy to the at least one fuel inlet explained above, the at least one oxidant inlet serves to supply an additional oxidant flow from the side of the body. Again, the side may laterally extend between two consecutive fuel cells, when the interconnecting device is installed. The oxidant flows from the oxidant inlet to the respective oxidant supply port along a line that is curved or bent.

In an advantageous embodiment, the at least one oxidant supply port is in fluid communication with both the at least one oxidant inlet and the at least one cathode exhaust input. Thus, at least one oxidant supply port receives oxidant both from the cathode exhaust input and the oxidant inlet. For example, air that flows through the cathode of a first fuel cell may be partially oxygen depleted and the remaining oxygen content may thus be used in the directly-following fuel-cell, i.e. a second fuel cell. However, it is feasible to supply additional oxidant to optimize the stoichiometry.

An oxidant passage between the at least one cathode exhaust input and the at least one oxidant inlet may comprise an orifice, wherein the body comprises the at least one cathode exhaust outlet, and wherein the orifice is dimensioned to divide a fluid flow from the at least one cathode exhaust input to the at least one oxidant supply port and the cathode exhaust outlet in a predetermined fraction for a predetermined operating state of the respective fuel cells attached to the interconnecting device. The orifice determines, how much of remaining oxidant from a first fuel cell is used in an oxidant flow that reaches a subsequent, second fuel through the oxidant supply port. It may be feasible to re-use only a minor part of surplus oxidant from the first fuel cell and to discharge the remaining major part of the surplus oxidant. The orifice may be tailored to a certain operating state of the respective fuel cells, e.g. a state in which the fuel cell stack delivers 75% power or any other suitable operating state.

Instead of an orifice, cross-sectional surfaces of passages between the at least one oxidant inlet, the at least one cathode exhaust inlet, the at least one cathode exhaust outlet and the at least one oxidant supply port may be as large as possible in the restricted available space inside the body. The individual flow divisions are then determined by valves, orifices, suctioning devices, pumps or any other suitable devices outside the body and connected to the oxidant inlet and the cathode exhaust outlet.

In an advantageous embodiment, the first interface surface comprises at least one pair of anode exhaust input and cathode exhaust input, wherein the second interface surface comprises at least one pair of fuel supply port and oxidant supply port. Compact arrangements of several SOFCs in a single block may be combined with such an interconnecting device to form a low-weight, compact SOFC stack.

In an advantageous embodiment, the at least one cathode exhaust input and the at least one oxidant supply port comprise an opening, which has a rectangular, round or otherwise regular shape. However, this depends on the fuel cells in contact with the interconnecting device. A rectangular shape may particularly be advantageous in terms of compactness of the SOFC itself and the stack created with these SOFCs.

In an advantageous embodiment, the first electrical port and the second electrical port surround the respective opening of the at least one cathode exhaust input and at least one oxidant supply port at least in the respective interface surface. The electrical ports may thus be realized in the form of a ring that surrounds the respective opening. A conductor connected to the electrical ports does not necessarily need to have a ring-shaped form.

In an advantageous embodiment, the body has a cuboid shape having a width, height, and depth, wherein the first interface surface and the second interface surface are opposed in a depth-wise direction, and wherein the width and height of the body exceeds the depth of the body. The body may be clamped between two consecutive SOFC, which may comprise a rectangular interface surface. By providing a small depth of the body, the fuel cell stack may be rather compact.

In an advantageous embodiment, the body is made from a ceramic material. Thus, the interconnecting device is capable of resisting high temperatures and comprises a rather low weight.

The invention further relates to a fuel cell stack, comprising a plurality of solid oxide fuel cells and at least one interconnecting device according to the preceding description arranged between two consecutive solid oxide fuel cells.

In an advantageous embodiment, the fuel cells comprise at least one column with at least one pair of an anode channel and a cathode channel arranged in an alternating manner in a block.

The invention further relates to a vehicle comprising at least one such fuel cell stack.

In an advantageous embodiment, the vehicle is an aircraft. The fuel cell stack may be integrated into an engine nacelle or in an unpressurized and preferably ventilated section of a fuselage or a component attached to the fuselage.

### Brief description of the figures

In the following, the attached drawings are used to illustrate exemplary embodiments in more detail. The illustrations are schematic and not to scale. Identical reference numerals refer to identical or similar elements. They show:
- Fig. 1: a fuel cell stack with SOFCs and an interconnecting device in a first example in an exploded view.
- Fig. 2: an interconnecting device in a second example.
- Fig. 3: an interconnecting device in a third example.
- Fig. 4: an interconnecting device in a fourth example.
- Fig. 5: an aircraft.

### Detailed description of exemplary embodiments

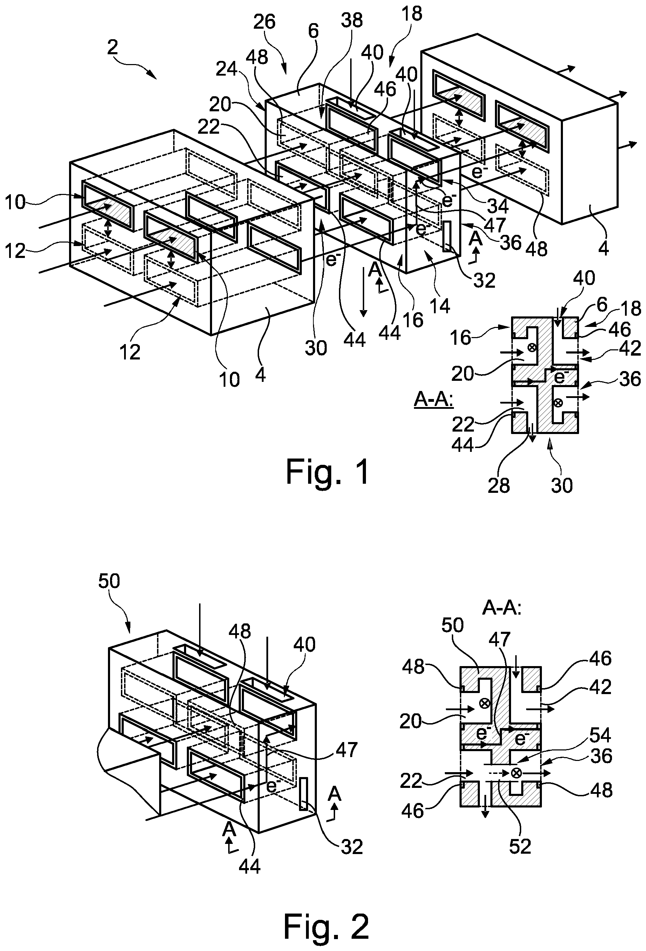

Fig. 1 shows a fuel cell stack 2 in an exploded view. Here, two solid oxide fuel cells 4 (SOFC) are shown, which together enclose an interconnecting device 6. The fuel cell 4 comprises a fuel cell block, which exemplarily is of a cuboid shape. It comprises two anode channels 10 and two cathode channels 12, which extend through the fuel cell block in a straight, linear manner. Exemplarily, the two anode channels 10 are arranged side by side in a top portion of the fuel cell block and the two cathode channels 12 are arranged side by side underneath the two anode channels 10 in a bottom portion of the fuel cell block. The anode channels 10 comprise a circumferential coating, which constitute anodes. In analogy, the cathode channels 12 comprise a cathode coating, which constitute the respective cathodes. The fuel cell block may be made from a ceramic material and fuel cells are created by pairwise combinations of anode channels 10 and cathode channels 12.

The interconnecting device 6 serves to connect the fuel cells 4 to form the fuel cell stack 2 similarly to a bipolar plate. Due to the different concept of the SOFC 4 compared to conventional, two-dimensional, planar PEM fuel cells or the like, the interconnecting device 6 has a different design. It comprises a body 14 having a first interface surface 16 and a second interface surface 18. The first interface surface 16 is designed to flushly contact the fuel cell 4 on the left-hand side in fig. 1, while the second interface surface 18 is designed to flushly contact the fuel cell 4 on the right-hand side of fig. 1.

The first interface surface 16 comprises two anode exhaust inputs 20 arranged side by side, while the positions of the anode exhaust inputs 20 match the positions of the two anode channels 10 of the fuel cell 4. The anode exhaust inputs 20 receive exhaust gas from the anode channels 10, i.e. surplus hydrogen and water vapor.

Underneath, two cathode exhaust inputs 22 are provided, wherein their positions match the positions of the two cathode channels 12. The cathode exhaust inputs 22 receive cathode exhaust, i.e. surplus oxidant, which may be oxygen or oxygen depleted air.

In this exemplary embodiment, anode exhaust gas entering the anode exhaust inputs 20 is routed to an anode exhaust outlet 24, which is located at a first side 26 of the interconnecting device 6. This means, that surplus fuel, i.e. hydrogen, exits the interconnecting device 6 through the anode exhaust outlet 24. The first side 26 extends perpendicularly to both the first interface surface 16 and the second interface surface 18. In fig. 1, it is arranged on the left-hand side. Consequently, the total flow of surplus fuel that enters the interconnecting device 6 leaves the interconnecting device 6 and is not routed into the subsequent fuel cell 4.

Cathode exhaust, which enters the cathode exhaust inlets 22, is routed to a cathode exhaust outlet 28, which is arranged at a second side 30 of the interconnecting device 6. The second side 30 extends perpendicularly to both the first interface surface 16 and the second interface surface 18 and is arranged at a bottom portion of the interconnecting device 6 in fig. 1. Consequently, the whole flow of surplus oxidant, e.g. oxygen depleted air, leaves the interconnecting device 6.

An oxidant inlet 32 is provided at a third side 34, which extends perpendicularly to the first interface surface 16 and the second interface surface 18 and is located on the right-hand side of the interconnecting device 6. Here, oxidant, e.g. air, enters the interconnecting device 6 and flows to oxidant supply ports 36 arranged on the first interface surface 18. Hence, the subsequent fuel cell 4, which is arranged downstream of the interconnecting device 6, is supplied with oxidant through the oxidant inlet 32 only.

On the fourth side 38, fuel inlets 40 are provided, through which fuel flows to fuel supply ports 42 arranged on the second interface surface 18 to enter the anode channels 10 of the subsequent fuel cell 4. Consequently, the interconnecting devices 6 in this secondary embodiment is able to completely separate exhaust flows from the first fuel-cell 4 and the second fuel-cell 4, wherein peripheral devices may be connected with the interconnecting device 6 to further handle these exhaust and supply flows. In this example, the fourth side 38 perpendicularly extends between the first interface surface 16 and the second interface surface 18 and is located at a top portion of the interconnecting device 6. The exhaust outlets 24 and 28 are thus clearly separated from the inlets 36 and 40.

For electrically connecting the fuel cells 4, the interconnecting device 6 comprises first electrical ports 44 on the first interface surface 16 and second electrical ports 46 on the second interface surface 18. The first electrical ports 44 are provided by a material section that surround the anode exhaust inlets 20, while the second electrical ports 46 surround the fuel supply ports 42. Thus, they will electrically contact the respective anode channels 10 and cathode channels 12 of two subsequent fuel cells 4 when the interconnecting device 6 is sandwiched between the respective fuel cells 4. Electrons travel through the interconnecting device 6 through an electrical conductor 47, which is integrated into the interconnecting device 6 and extends from the first electrical ports 44 and second electrical ports 46. On the first interface surface 16, the anode exhaust inlets 20 may comprise an insulating layer or a recess 48 to avoid an electrical contact between the anode channels 10 and the interconnecting device 6.

The interconnecting device 6 may be created by a three-dimensional printing process, i.e. an additive manufacturing method, wherein the whole interconnecting device 6 may be made from a light-weight, electrically insulating material, which is able to withstand the elevated temperatures that are created in the fuel cell process. For example, it may be Yttria Stabilized Zirconia, which is also usable as electrolyte for the SOFCs 4.

In other variants, which are not explicitly shown as examples, the interconnecting device 6 may be made from an electrically conductive material. Then, a separate conductor 47 would not be required, but instead isolating means for preventing short circuits between the respective parts of the fuel cells 4.

In Fig. 2, another example of an interconnecting device 50 is provided. Here, the design is generally equal to the interconnecting device 2, but comprises an oxidant passage 52 between the cathode exhaust inlets 22 and the oxidant supply ports 36, such that at least a part of cathode exhaust gas may flow into the oxidant supply ports 36 to be re-used. For example, air as an oxidant may be only partially oxygen depleted and has an oxygen content that is still usable in a further fuel cell 4. The oxidant passage 52 may comprise an orifice 54, i.e. constricted space between the cathode exhaust inlet 22 and the oxidant supply port 36, which orifice 52 is dimensioned to divide a fluid flow from the cathode exhaust inputs 22 to the at least one oxidant supply port 36 and the cathode exhaust outlets 28 in a predetermined fraction for a predetermined operating state of the respective fuel cells 4 attached to the interconnecting device 50.

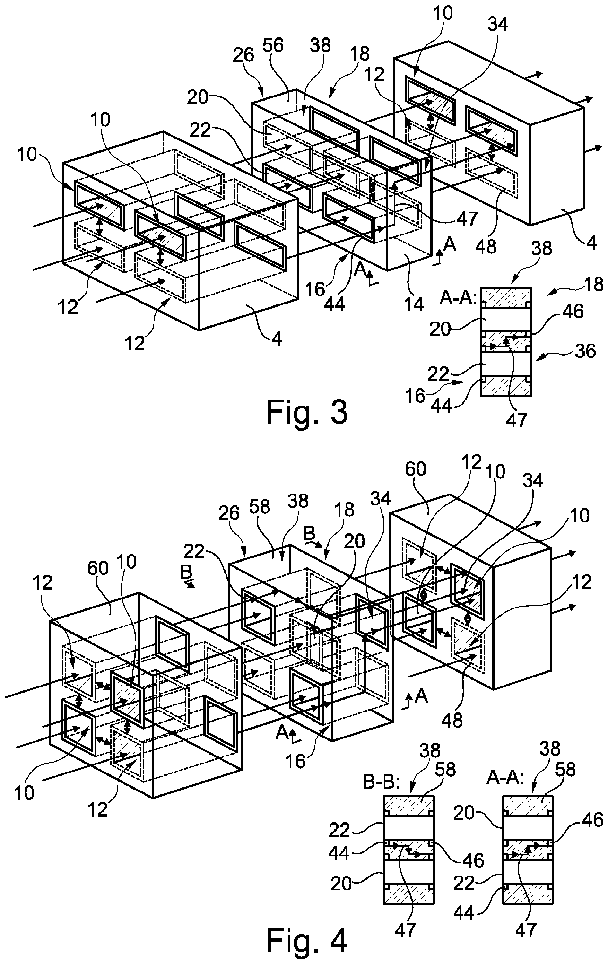

In Fig. 3, and interconnecting device 56 is shown, in which cathode exhaust gas and anode exhaust gas simply flow through the interconnecting device 56 from one fuel cell 4 to a subsequent fuel cell 4. Anode exhaust inlets 20 are thus in a direct fluid communication with fuel supply ports 42 and cathode exhaust inlets 22 are in direct fluid communication with oxidant supply ports 36. If air is used as oxidant, depleted air from an upstream SOFC 4 has only a marginal effect, and the fuel gas can be adjusted by pressure to be sufficient for several downstream SOFCs 4. This design has several considerable advantages. For instance, due to the simple through-flow of both reactants, the interconnecting device 56 may be made with a simpler design. It may be dimensioned to be thinner and thus more weight-saving. It is also possible to easily benefit from relatively short dimensions of each SOFC 4 and short current collection distances.

In Fig. 4, another exemplary embodiment of an interconnecting device 58 is shown, which is adapted to conform a different design of a solid oxide fuel cell 60 and which is mainly based on the design shown in Fig. 3. However, the SOFCs 60 show electrochemical reactions in both transverse directions of the SOFCs 60 and the interconnecting device is correspondingly modified.

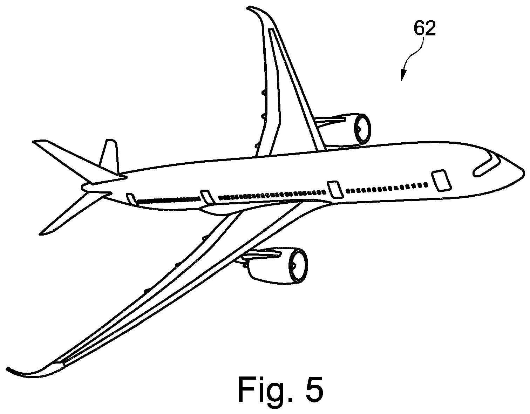

Fig. 5 shows an aircraft 62, into which a fuel cell stack having a plurality of fuel cells 4 or 60 and interconnecting devices 6, 56 or 58 is arranged.

### Reference numerals

- 2: fuel cell stack
- 4: fuel cell
- 6: interconnecting device
- 10: anode channel
- 12: cathode channel
- 14: body
- 16: first interface surface
- 18: second interface surface
- 20: anode exhaust input
- 22: cathode exhaust input
- 24: anode exhaust outlet
- 26: first side
- 28: cathode exhaust outlet
- 30: second side
- 32: oxidant inlet
- 34: third side
- 36: oxidant supply port
- 38: fourth side
- 40: fuel inlet
- 42: fuel supply port
- 44: first electrical port
- 46: second electrical port
- 47: conductor
- 48: layer / recess
- 50: interconnecting device
- 52: oxidant passage
- 54: orifice
- 56: interconnecting device
- 58: interconnecting device
- 60: fuel cell
- 62: aircraft

## Claims

1. An interconnecting device (6, 50, 56, 58) for solid oxide fuel cells (4, 60), the interconnecting device (6, 50, 56, 58) comprising a body (14) having a first interface surface (16), and a second interface surface (18) on distinct sides of the body (14),
wherein the first interface surface (16) comprises at least one anode exhaust input (20) and at least one cathode exhaust input (22) in a distance to the at least one anode exhaust input (20),
wherein the second interface surface (18) comprises at least one fuel supply port (42) and at least one oxidant supply port (42) in a distance to the at least one fuel supply port (42),
wherein the at least one anode exhaust input (20) is in fluid communication with the at least one fuel supply port (42) and/or at least one anode exhaust outlet (24) arranged at a distance to the first interface surface (16) and the second interface surface (18),
wherein the at least one cathode exhaust input (22) is in fluid communication with the at least one oxidant supply port (42) and/or at least one cathode exhaust outlet (28) arranged at a distance to the first interface surface (16) and the second interface surface (18),
wherein at least one first electrical port (44) is arranged at or in the at least one cathode exhaust input (22) and is connectable from the first interface surface (16),
wherein at least one second electrical port (46) is arranged at or in the at least one fuel supply port (42) and is connectable from the second interface surface (18), and
wherein the at least one first electrical port (44) is electrically connected to the at least one second electrical port (46);
wherein the at least one first electrical port (44) and the at least one second electrical port (46) are configured to electrically connect either to an anode channel (10) or a cathode channel (12) of an upstream fuel cell (4) only and inversely connect either to the cathode channel (12) or the anode channel (10) only of a downstream fuel cell (4), wherein the other one of the anode channel (10) or the cathode channel (12) is insulated against the body (14);
wherein on the first interface surface (16), the anode exhaust input (20) comprises an insulating layer or a recess (48) to avoid an electrical contact between the anode channel (10) and the interconnecting device (6); and
wherein the position of the cathode exhaust input (22) matches the position of the cathode channel (12) and the position of the anode exhaust input (20) matches the position of the anode channel (10).

2. Interconnecting device (6, 50, 56, 58) of claim 1,
wherein the first interface surface (16) and the second interface surface (18) are arranged on opposed sides of the body (14).

3. Interconnecting device (6, 50, 56, 58) of claim 1 or 2,
further comprising at least one fuel inlet (40) arranged on a side of the body (14) that does neither comprise the first interface surface (16) nor the second interface surface (18),
wherein the at least one fuel inlet (40) is in fluid communication with the at least one fuel supply port (42).

4. Interconnecting device (6, 50, 56, 58) of any of the preceding claims,
further comprising at least one oxidant inlet (32) arranged on a side of the body (14) that does neither comprise the first interface surface (16) nor the second interface surface (18),
wherein the at least one oxidant inlet (32) is in fluid communication with the at least one oxidant supply port (42).

5. Interconnecting device (6, 50, 56, 58) of claim 4,
wherein the at least one oxidant supply port (42) is in fluid communication with both the at least one oxidant inlet (32) and the at least one cathode exhaust input (22).

6. Interconnecting device (6, 50, 56, 58) of claim 5,
Wherein an oxidant passage (52) between the at least one cathode exhaust input (22) and the at least one oxidant inlet (32) comprises an orifice (54),
wherein the body (14) comprises the at least one cathode exhaust outlet (28), and
wherein the orifice (54) is dimensioned to divide a fluid flow from the at least one cathode exhaust input (22) to the at least one oxidant supply port (42) and the cathode exhaust outlet (28) in a predetermined fraction for a predetermined operating state of the respective fuel cells (4, 60) attached to the interconnecting device (6, 50, 56, 58).

7. Interconnecting device (6, 50, 56, 58) of any of the preceding claims,
wherein the first interface surface (16) comprises at least one pair of anode exhaust input (20) and cathode exhaust input (22), and
wherein the second interface surface (18) comprises at least one pair of fuel supply port (42) and oxidant supply port (42).

8. Interconnecting device (6, 50, 56, 58) of any of the preceding claims
wherein the at least one cathode exhaust input (22) and the at least one oxidant supply port (42) comprise an opening, which has a rectangular, round or otherwise regular shape.

9. Interconnecting device (6, 50, 56, 58) of claim 8,
wherein the first electrical port (44) and the second electrical port (46) surround the respective opening of the at least one cathode exhaust input (22) and at least one oxidant supply port (42) at least in the respective interface surface.

10. Interconnecting device (6, 50, 56, 58) of any of the preceding claims,
wherein the body (14) has a cuboid shape having a width, height, and depth, wherein the first interface surface (16) and the second interface surface (18) are opposed in a depth-wise direction, and wherein the width and height of the body (14) exceeds the depth of the body (14).

11. Interconnecting device (6, 50, 56, 58) of any of the preceding claims,
wherein the body (14) is made from a ceramic or metallic material.

12. A fuel cell stack, comprising a plurality of solid oxide fuel cells (60) and at least one interconnecting device (6, 50, 56, 58) according to any of the preceding claims arranged between two consecutive solid oxide fuel cells (60).

13. Fuel cell stack of claim 12, wherein the fuel cells (4, 60) comprise at least one column with at least one pair of the anode channel (10) and the cathode channel (12) arranged in an alternating manner in a block.

14. A vehicle (62), comprising at least one fuel cell stack of claim 12 or 13.

15. Vehicle (62) of claim 14, wherein the vehicle (62) is an aircraft (62).

## Patentansprüche

1. Verbindungsvorrichtung (6, 50, 56, 58) für Festoxidbrennstoffzellen (4, 60), wobei die Verbindungsvorrichtung (6, 50, 56, 58) einen Körper (14) mit einer ersten Grenzflächenoberfläche (16) und einer zweiten Grenzflächenoberfläche (18) auf verschiedenen Seiten des Körpers (14) aufweist,
wobei die erste Grenzflächenoberfläche (16) mindestens einen Anodenabgaseingang (20) und mindestens einen Kathodenabgaseingang (22) in einem Abstand zu dem mindestens einen Anodenabgaseingang (20) umfasst,
wobei die zweite Grenzflächenoberfläche (18) mindestens einen Brennstoffzufuhranschluss (42) und mindestens einen Oxidationsmittelzufuhranschluss (42) in einem Abstand zu dem mindestens einen Brennstoffzufuhranschluss (42) umfasst,
wobei der mindestens eine Anodenabgaseingang (20) in Fluidverbindung mit dem mindestens einen Brennstoffzufuhranschluss (42) und/oder mindestens einem Anodenabgasauslass (24) steht, die in einem Abstand zur ersten Grenzflächenoberfläche (16) und der zweiten Grenzflächenoberfläche (18) angeordnet sind,
wobei der mindestens eine Kathodenabgaseingang (22) in Fluidverbindung mit dem mindestens einen Oxidationsmittelzufuhranschluss (42) und/oder mindestens einem Kathodenabgasauslass (28) steht, die in einem Abstand zur ersten Grenzflächenoberfläche (16) und zur zweiten Grenzflächenoberfläche (18) angeordnet sind,
wobei mindestens ein erster elektrischer Anschluss (44) an oder in dem mindestens einen Kathodenabgaseingang (22) angeordnet und von der ersten Grenzflächenoberfläche (16) aus anschließbar ist,
wobei mindestens ein zweiter elektrischer Anschluss (46) an oder in dem mindestens einen Brennstoffzufuhranschluss (42) angeordnet und von der zweiten Grenzflächenoberfläche (18) aus anschließbar ist, und
wobei der mindestens eine erste elektrische Anschluss (44) elektrisch mit dem mindestens einen zweiten elektrischen Anschluss (46) verbunden ist;
wobei der mindestens eine erste elektrische Anschluss (44) und der mindestens eine zweite elektrische Anschluss (46) dazu ausgelegt sind, entweder nur mit einem Anodenkanal (10) oder einem Kathodenkanal (12) einer stromaufwärts gelegenen Brennstoffzelle (4) elektrisch verbunden zu werden und umgekehrt entweder nur mit dem Kathodenkanal (12) oder dem Anodenkanal (10) einer stromabwärts gelegenen Brennstoffzelle (4) verbunden zu werden, wobei der andere des Anodenkanals (10) oder des Kathodenkanals (12) gegen den Körper (14) isoliert ist;
wobei auf der ersten Grenzflächenoberfläche (16) der Anodenabgaseingang (20) eine Isolierschicht oder eine Aussparung (48) umfasst, um einen elektrischen Kontakt zwischen dem Anodenkanal (10) und der Verbindungsvorrichtung (6) zu vermeiden; und
wobei die Position des Kathodenabgaseingangs (22) mit der Position des Kathodenkanals (12) übereinstimmt und die Position des Anodenabgaseingangs (20) mit der Position des Anodenkanals (10) übereinstimmt.

2. Verbindungsvorrichtung (6, 50, 56, 58) nach Anspruch 1,
wobei die erste Grenzflächenoberfläche (16) und die zweite Grenzflächenoberfläche (18) auf gegenüberliegenden Seiten des Körpers (14) angeordnet sind.

3. Verbindungsvorrichtung (6, 50, 56, 58) nach Anspruch 1 oder 2,
ferner umfassend mindestens einen Brennstoffeinlass (40), der auf einer Seite des Körpers (14) angeordnet ist, die weder die erste Grenzflächenoberfläche (16) noch die zweite Grenzflächenoberfläche (18) umfasst,
wobei der mindestens eine Brennstoffeinlass (40) in Fluidverbindung mit dem mindestens einen Brennstoffzufuhranschluss (42) steht.

4. Verbindungsvorrichtung (6, 50, 56, 58) nach einem der vorhergehenden Ansprüche,
ferner umfassend mindestens einen Oxidationsmitteleinlass (32), der auf einer Seite des Körpers (14) angeordnet ist, die weder die erste Grenzflächenoberfläche (16) noch die zweite Grenzflächenoberfläche (18) umfasst,
wobei der mindestens eine Oxidationsmitteleinlass (32) in Fluidverbindung mit dem mindestens einen Oxidationsmittelzufuhranschluss (42) steht.

5. Verbindungsvorrichtung (6, 50, 56, 58) nach Anspruch 4,
wobei der mindestens eine Oxidationsmittelzufuhranschluss (42) sowohl mit dem mindestens einen Oxidationsmitteleinlass (32) als auch mit dem mindestens einen Kathodenabgaseingang (22) in Fluidverbindung steht.

6. Verbindungsvorrichtung (6, 50, 56, 58) nach Anspruch 5,
wobei ein Oxidationsmitteldurchgang (52) zwischen dem mindestens einen Kathodenabgaseingang (22) und dem mindestens einen Oxidationsmitteleinlass (32) eine Öffnung (54) umfasst,
wobei der Körper (14) den mindestens einen Kathodenabgasauslass (28) umfasst, und
wobei die Öffnung (54) so dimensioniert ist, dass sie einen Fluidstrom vom mindestens einen Kathodenabgaseingang (22) zum mindestens einen Oxidationsmittelzufuhranschluss (42) und zum Kathodenabgasauslass (28) in einem vorbestimmten Anteil für einen vorbestimmten Betriebszustand der betreffenden an der Verbindungsvorrichtung (6, 50, 56, 58) angebrachten Brennstoffzellen (4, 60) aufteilt.

7. Verbindungsvorrichtung (6, 50, 56, 58) nach einem der vorhergehenden Ansprüche,
wobei die erste Grenzflächenoberfläche (16) mindestens ein Paar aus Anodenabgaseingang (20) und Kathodenabgaseingang (22) umfasst, und
wobei die zweite Grenzflächenoberfläche (18) mindestens ein Paar aus Brennstoffzufuhranschluss (42) und Oxidationsmittelzufuhranschluss (42) umfasst.

8. Verbindungsvorrichtung (6, 50, 56, 58) nach einem der vorhergehenden Ansprüche,
wobei der mindestens eine Kathodenabgaseingang (22) und der mindestens eine Oxidationsmittelzufuhranschluss (42) eine Öffnung umfassen, die eine rechteckige, runde oder anderweitig regelmäßige Form aufweist.

9. Verbindungsvorrichtung (6, 50, 56, 58) nach Anspruch 8,
wobei der erste elektrische Anschluss (44) und der zweite elektrische Anschluss (46) die betreffende Öffnung des mindestens einen Kathodenabgaseingangs (22) und mindestens eines Oxidationsmittelzufuhranschlusses (42) zumindest in der betreffenden Grenzflächenoberfläche umgeben.

10. Verbindungsvorrichtung (6, 50, 56, 58) nach einem der vorhergehenden Ansprüche,
wobei der Körper (14) eine Quaderform mit einer Breite, Höhe und Tiefe aufweist, wobei die erste Grenzflächenoberfläche (16) und die zweite Grenzflächenoberfläche (18) in Tiefenrichtung gegenüberliegen, und wobei die Breite und Höhe des Körpers (14) die Tiefe des Körpers (14) überschreitet.

11. Verbindungsvorrichtung (6, 50, 56, 58) nach einem der vorhergehenden Ansprüche,
wobei der Körper (14) aus einem keramischen oder metallischen Material hergestellt ist.

12. Brennstoffzellenstapel, umfassend eine Vielzahl von Festoxidbrennstoffzellen (60) und mindestens eine Verbindungsvorrichtung (6, 50, 56, 58) nach einem der vorhergehenden Ansprüche, die zwischen zwei aufeinanderfolgenden Festoxidbrennstoffzellen (60) angeordnet ist.

13. Brennstoffzellenstapel nach Anspruch 12, wobei die Brennstoffzellen (4, 60) mindestens eine Säule mit mindestens einem Paar aus dem Anodenkanal (10) und dem Kathodenkanal (12) umfassen, die in einem Block abwechselnd angeordnet sind.

14. Fahrzeug (62), umfassend mindestens einen Brennstoffzellenstapel nach Anspruch 12 oder 13.

15. Fahrzeug (62) nach Anspruch 14, wobei das Fahrzeug (62) ein Flugzeug (62) ist.

## Revendications

1. Dispositif d'interconnexion (6, 50, 56, 58) pour piles à combustible à oxyde solide (4, 60), le dispositif d'interconnexion (6, 50, 56, 58) comprenant un corps (14) ayant une première surface d'interface (16), et une seconde surface d'interface (18) sur des côtés distincts du corps (14),
dans lequel la première surface d'interface (16) comprend au moins une entrée d'échappement d'anode (20) et au moins une entrée d'échappement de cathode (22) à distance de l'au moins une entrée d'échappement d'anode (20),
dans lequel la seconde surface d'interface (18) comprend au moins un orifice d'alimentation de combustible (42) et au moins un orifice d'alimentation d'oxydant (42) à distance de l'au moins un orifice d'alimentation de combustible (42),
dans lequel l'au moins une entrée d'échappement d'anode (20) est en communication fluidique avec l'au moins un orifice d'alimentation de combustible (42) et/ou au moins une sortie d'échappement d'anode (24) agencée à distance de la première surface d'interface (16) et de la seconde surface d'interface (18),
dans lequel l'au moins une entrée d'échappement de cathode (22) est en communication fluidique avec l'au moins un orifice d'alimentation d'oxydant (42) et/ou au moins une sortie d'échappement de cathode (28) agencée à distance de la première surface d'interface (16) et de la seconde surface d'interface (18),
dans lequel au moins un premier orifice électrique (44) est agencé au niveau de ou dans l'au moins une sortie d'échappement de cathode (22) est peut être relié à partir de la première surface d'interface (16),
dans lequel au moins un second orifice électrique (46) est agencé au niveau de ou dans l'au moins un orifice d'alimentation de combustible (42) est peut être relié à partir de la seconde surface d'interface (18), et
dans lequel l'au moins un premier orifice électrique (44) est relié électriquement à l'au moins un second orifice électrique (46) ;
dans lequel l'au moins un premier orifice électrique (44) et l'au moins un second orifice électrique (46) sont configurés pour être reliés électriquement soit à un canal d'anode (10), soit à un canal de cathode (12) d'une pile à combustible (4) en amont uniquement et sont reliés de manière inverse soit au canal de cathode (12), soit au canal d'anode (10) uniquement d'une pile à combustible (4) en aval, dans lequel l'autre du canal d'anode (10) ou du canal de cathode (12) est isolé contre le corps (14) ;
dans lequel sur la première surface d'interface (16), l'entrée d'échappement d'anode (20) comprend une couche isolante ou un évidement (48) pour éviter un contact électrique entre le canal d'anode (10) et le dispositif d'interconnexion (6) ; et
dans lequel la position de l'entrée d'échappement de cathode (22) correspond à la position du canal de cathode (12) et la position de l'entrée d'échappement d'anode (20) correspond à la position du canal d'anode (10).

2. Dispositif d'interconnexion (6, 50, 56, 58) selon la revendication 1,
dans lequel la première surface d'interface (16) et la seconde surface d'interface (18) sont agencées sur des côtés opposés du corps (14).

3. Dispositif d'interconnexion (6, 50, 56, 58) selon la revendication 1 ou 2,
comprenant en outre au moins une entrée de combustible (40) agencée sur un côté du corps (14) qui ne comprend pas la première surface d'interface (16) ni la seconde surface d'interface (18),
dans lequel l'au moins une entrée de combustible (40) est en communication fluidique avec l'au moins un orifice d'alimentation de combustible (42).

4. Dispositif d'interconnexion (6, 50, 56, 58) selon l'une quelconque des revendications précédentes,
comprenant en outre au moins une entrée d'oxydant (32) agencée sur un côté du corps (14) qui ne comprend pas la première surface d'interface (16) ni la seconde surface d'interface (18),
dans lequel l'au moins une entrée d'oxydant (32) est en communication fluidique avec l'au moins un orifice d'alimentation d'oxydant (42).

5. Dispositif d'interconnexion (6, 50, 56, 58) selon la revendication 4,
dans lequel l'au moins un orifice d'alimentation d'oxydant (42) est en communication fluidique avec à la fois l'au moins une entrée d'oxydant (32) et l'au moins une entrée d'échappement de cathode (22).

6. Dispositif d'interconnexion (6, 50, 56, 58) selon la revendication 5,
dans lequel un passage d'oxydant (52) entre l'au moins une entrée d'échappement de cathode (22) et l'au moins une entrée d'oxydant (32) comprend un orifice (54),
dans lequel le corps (14) comprend l'au moins une sortie d'échappement de cathode (28), et
dans lequel l'orifice (54) est dimensionné pour diviser un écoulement de fluide de l'au moins une entrée d'échappement de cathode (22) à l'au moins un orifice d'alimentation d'oxydant (42) et à la sortie d'échappement de cathode (28) dans une fraction prédéterminée pour un état de fonctionnement prédéterminé des piles à combustible (4, 60) respectives fixées au dispositif d'interconnexion (6, 50, 56, 58).

7. Dispositif d'interconnexion (6, 50, 56, 58) selon l'une quelconque des revendications précédentes,
dans lequel la première surface d'interface (16) comprend au moins une paire d'entrée d'échappement d'anode (20) et d'entrée d'échappement de cathode (22), et
dans lequel la seconde surface d'interface (18) comprend au moins une paire d'orifice d'alimentation de combustible (42) et d'orifice d'alimentation d'oxydant (42).

8. Dispositif d'interconnexion (6, 50, 56, 58) selon l'une quelconque des revendications précédentes,
dans lequel l'au moins une entrée d'échappement de cathode (22) et l'au moins un orifice d'alimentation d'oxydant (42) comprennent une ouverture, qui a une forme rectangulaire, ronde ou autrement régulière.

9. Dispositif d'interconnexion (6, 50, 56, 58) selon la revendication 8,
dans lequel le premier orifice électrique (44) et le second orifice électrique (46) entourent l'ouverture respective de l'au moins une entrée d'échappement de cathode (22) et au moins un orifice d'alimentation d'oxydant (42) au moins dans la surface d'interface respective.

10. Dispositif d'interconnexion (6, 50, 56, 58) selon l'une quelconque des revendications précédentes,
dans lequel le corps (14) a une forme cuboïde ayant une largeur, une hauteur, et une profondeur, dans lequel la première surface d'interface (16) et la seconde surface d'interface (18) sont opposées dans une direction de profondeur, et dans lequel la largeur et la hauteur du corps (14) dépassent la profondeur du corps (14).

11. Dispositif d'interconnexion (6, 50, 56, 58) selon l'une quelconque des revendications précédentes,
dans lequel le corps (14) est constitué d'un matériau céramique ou métallique.

12. Empilement de piles à combustible, comprenant une pluralité de piles à combustible à oxyde solide (60) et au moins un dispositif d'interconnexion (6, 50, 56, 58) selon l'une quelconque des revendications précédentes agencé entre deux piles à combustible à oxyde solide (60) consécutives.

13. Empilement de piles à combustible selon la revendication 12, dans lequel les piles à combustible (4, 60) comprennent au moins une colonne avec au moins une paire du canal d'anode (10) et du canal de cathode (12) agencés en alternance en un bloc.

14. Véhicule (62), comprenant au moins un empilement de piles à combustible selon la revendication 12 ou 13.

15. Véhicule (62) selon la revendication 14, dans lequel le véhicule (62) est un aéronef (62).
